# EUROPEAN PATENT APPLICATION

(11) **EP 4 586 690 A1**
(43) Date of publication of application: **16.07.2025**
(21) Application number: 23863524.7
(22) Date of filing: 07.09.2023
(51) Int. Cl.: H04W 36/36, H04W 36/00

(54) **MOBILITY ENHANCEMENT IN WIRELESS COMMUNICATION SYSTEM**

(30) Priority: 07.09.2022 US 202263404521 P
(71) Applicant: LG Electronics Inc., Yeongdeungpo-gu Seoul 07336 (KR)
(72) Inventor: BYUN, Daewook, Seoul 06772 (KR); KIM, Hongsuk, Seoul 06772 (KR); JUNG, Sunghoon, Seoul 06772 (KR); KIM, Seokjung, Seoul 06772 (KR)
(74) Representative: Mooser, Sebastian Thomas
(86) International application number: PCT/KR2023/013420
(87) International publication number: WO 2024/054060

(57) **Abstract**

The present disclosure relates to mobility enhancement. According to various embodiments, a method performed by a secondary node (SN) establishing dual connectivity DC) with a master node (MN) for a user equipment (UE) in a wireless communication system comprises the steps of: storing a list of conditional mobility commands for SN mobility of the UE from the SN to a target SN; on the basis of the MN mobility of the UE being initiated from the MN to the target MN, receiving, from the target MN, an SN addition request message including settings for the target MN; on the basis of the settings for the target MN, determining one or more conditional mobility commands from the list of conditional mobility commands that remain available for the target MN even after the MN mobility; and in response to the SN addition request message, transmitting, to the target MN, an SN addition request acknowledge (ACK) message including the one or more conditional mobility commands.

## Description

### Technical Field

The present disclosure relates to mobility enhancement.

### Background Art

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In a wireless communication system, a UE can perform inter-base station mobility. Such mobility can include conditional mobility in which the UE selects a target cell satisfying a handover condition among a plurality of target cells and performs mobility to the target cell. The UE can store a plurality of conditional mobility commands, and can continue to maintain the remaining conditional mobility commands for the next mobility even after mobility to a cell is completed for mobility enhancement. In this case, the UE can perform the next mobility without reconfiguration or re-initialization for the candidate cells.

### Disclosure of Invention

### Solution to Problem

According to an embodiment of the present disclosure, a method performed by a secondary node (SN) establishing a dual connectivity (DC) with a master node (MN) for a user equipment (UE) in a wireless communication system comprises: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

According to an embodiment of the present disclosure, a secondary node (SN) establishing a dual connectivity (DC) with a master node (MN) for a user equipment (UE) in a wireless communication system comprises: a transceiver; a memory; and at least one processor operatively coupled to the transceiver and the memory, wherein the memory stores instructions that, based on being executed by the at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

According to an embodiment of the present disclosure, a user equipment (UE) having established a dual connectivity (DC) with a master node (MN) and a secondary node (SN) in a wireless communication system comprises: a transceiver; a memory; and at least one processor operatively coupled to the transceiver and the memory, wherein the memory stores instructions that, based on being executed by the at least one processor, perform operations comprising: receiving, from the MN, an SN mobility command comprising a list of conditional mobility commands for an SN mobility; receiving, from the MN, a handover command for an MN mobility, wherein the handover command comprises information for one or more conditional mobility commands available for a target MN after the MN mobility in the list of conditional mobility commands; based on the handover command, performing the MN mobility from the MN to the target MN; after performing the MN mobility, evaluating execution conditions for SNs related to the one or more conditional mobility commands; and based on a conditional mobility command related to a target SN for which execution condition is satisfied among the one or more conditional mobility commands, performing the SN mobility from the SN to the target MN.

According to an embodiment of the present disclosure, a method performed by a user equipment (UE) having established a dual connectivity (DC) with a master node (MN) and a secondary node (SN) in a wireless communication system comprises: receiving, from the MN, an SN mobility command comprising a list of conditional mobility commands for an SN mobility; receiving, from the MN, a handover command for an MN mobility, wherein the handover command comprises information for one or more conditional mobility commands available for a target MN after the MN mobility in the list of conditional mobility commands; based on the handover command, performing the MN mobility from the MN to the target MN; after performing the MN mobility, evaluating execution conditions for SNs related to the one or more conditional mobility commands; and based on a conditional mobility command related to a target SN for which execution condition is satisfied among the one or more conditional mobility commands, performing the SN mobility from the SN to the target MN.

According to an embodiment of the present disclosure, an apparatus configured to operate in a wireless communication system comprises: at least one processor; and a memory operatively coupled to the at least one processor and storing instructions that, based on being executed by the at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

According to an embodiment of the present disclosure, a non-transitory computer readable medium (CRM) has stored thereon a software code implementing instructions that, based on being executed by at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

### Brief Description of Drawings

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of a dual connectivity (DC) architecture to which technical features of the present disclosure can be applied.
FIG. 5 shows an example of a conditional handover procedure to which the technical idea of the present disclosure can be applied.
FIG. 6 shows an example of an S-NG-RAN node addition preparation procedure according to an embodiment of the present disclosure.
FIG. 7 shows an example of a conditional SN change procedure initiated by an SN according to an embodiment of the present disclosure.
FIG. 8 shows an example of an inter-MN handover procedure without SN change initiated by an MN according to an embodiment of the present disclosure.
FIG. 9 shows an example of a method performed by a SN establishing a DC with a MN for a UE.
FIG. 10 shows an example of a method performed by a UE having established a DC with a MN and a SN according to an embodiment of the present disclosure.

### Mode for the Invention

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

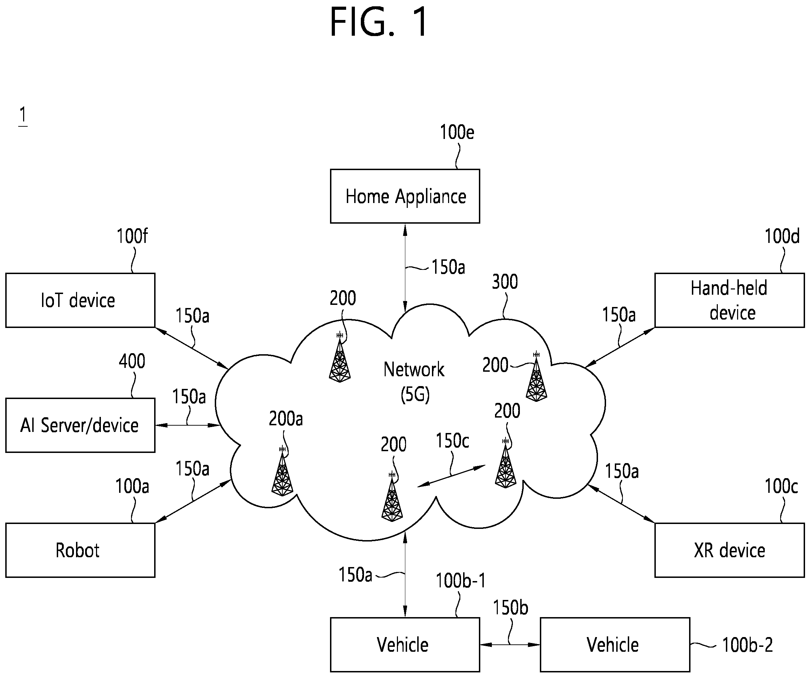

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

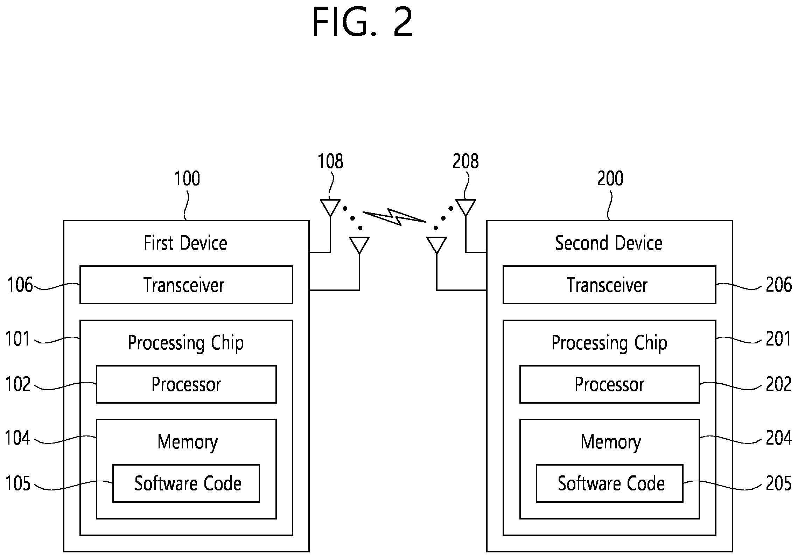

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names. FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

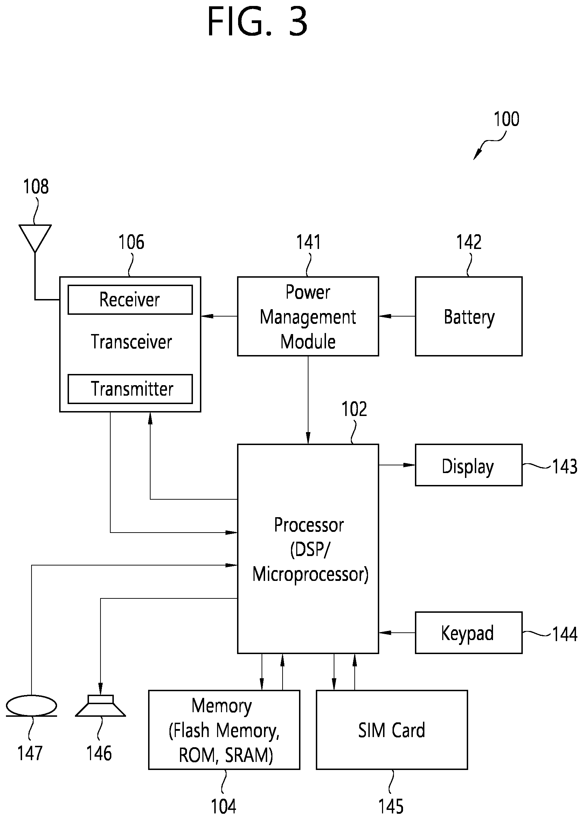

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

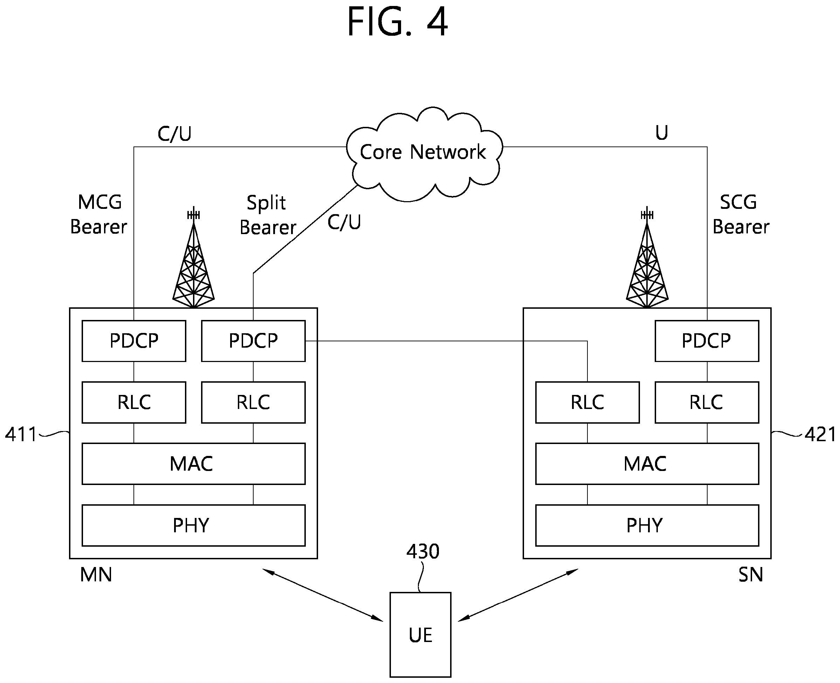

FIG. 4 shows an example of a dual connectivity (DC) architecture to which technical features of the present disclosure can be applied.

Referring to FIG. 4, MN 411, SN 421, and a UE 430 communicating with both the MN 411 and the SN 421 are illustrated. As illustrated in FIG. 4, DC refers to a scheme in which a UE (e.g., UE 430) utilizes radio resources provided by at least two RAN nodes comprising a MN (e.g., MN 411) and one or more SNs (e.g., SN 421). In other words, DC refers to a scheme in which a UE is connected to both the MN and the one or more SNs, and communicates with both the MN and the one or more SNs. Since the MN and the SN may be in different sites, a backhaul between the MN and the SN may be construed as non-ideal backhaul (e.g., relatively large delay between nodes).

MN (e.g., MN 411) refers to a main RAN node providing services to a UE in DC situation. SN (e.g., SN 421) refers to an additional RAN node providing services to the UE with the MN in the DC situation. If one RAN node provides services to a UE, the RAN node may be a MN. SN can exist if MN exists.

For example, the MN may be associated with macro cell whose coverage is relatively larger than that of a small cell. However, the MN does not have to be associated with macro cell - that is, the MN may be associated with a small cell. Throughout the disclosure, a RAN node that is associated with a macro cell may be referred to as 'macro cell node'. MN may comprise macro cell node.

For example, the SN may be associated with small cell (e.g., micro cell, pico cell, femto cell) whose coverage is relatively smaller than that of a macro cell. However, the SN does not have to be associated with small cell - that is, the SN may be associated with a macro cell. Throughout the disclosure, a RAN node that is associated with a small cell may be referred to as 'small cell node'. SN may comprise small cell node.

The MN may be associated with a master cell group (MCG). MCG may refer to a group of serving cells associated with the MN, and may comprise a primary cell (PCell) and optionally one or more secondary cells (SCells). User plane data and/or control plane data may be transported from a core network to the MN through a MCG bearer. MCG bearer refers to a bearer whose radio protocols are located in the MN to use MN resources. As shown in FIG. 4, the radio protocols of the MCG bearer may comprise PDCP, RLC, MAC and/or PHY.

The SN may be associated with a secondary cell group (SCG). SCG may refer to a group of serving cells associated with the SN, and may comprise a primary secondary cell (PSCell) and optionally one or more SCells. User plane data may be transported from a core network to the SN through a SCG bearer. SCG bearer refers to a bearer whose radio protocols are located in the SN to use SN resources. As shown in FIG. 4, the radio protocols of the SCG bearer may comprise PDCP, RLC, MAC and PHY.

User plane data and/or control plane data may be transported from a core network to the MN and split up/duplicated in the MN, and at least part of the split/duplicated data may be forwarded to the SN through a split bearer. Split bearer refers to a bearer whose radio protocols are located in both the MN and the SN to use both MN resources and SN resources. As shown in FIG. 4, the radio protocols of the split bearer located in the MN may comprise PDCP, RLC, MAC and PHY. The radio protocols of the split bearer located in the SN may comprise RLC, MAC and PHY.

According to various embodiments, PDCP anchor/PDCP anchor point/PDCP anchor node refers to a RAN node comprising a PDCP entity which splits up and/or duplicates data and forwards at least part of the split/duplicated data over X2/Xn interface to another RAN node. In the example of FIG. 4, PDCP anchor node may be MN.

According to various embodiments, the MN for the UE may be changed. This may be referred to as handover, or a MN handover.

According to various embodiments, a SN may newly start providing radio resources to the UE, establishing a connection with the UE, and/or communicating with the UE (i.e., SN for the UE may be newly added). This may be referred to as a SN addition.

According to various embodiments, a SN for the UE may be changed while the MN for the UE is maintained. This may be referred to as a SN change.

According to various embodiments, DC may comprise E-UTRAN NR - DC (EN-DC), and/or multi-radio access technology (RAT) - DC (MR-DC). EN-DC refers to a DC situation in which a UE utilizes radio resources provided by E-UTRAN node and NR RAN node. MR-DC refers to a DC situation in which a UE utilizes radio resources provided by RAN nodes with different RATs.

Hereinafter, handover (HO) is described.

A handover may include a legacy handover in which a handover is performed immediately to a target cell determined by a network upon receiving an RRC reconfiguration for the target cell, and a conditional handover in which a UE selects a target cell satisfying a handover condition among multiple target cells and performs a handover to the target cell.

A handover may include a PCell change. In addition, the description of a handover in the present disclosure may be applied to other mobility procedures such as a PSCell change (or a secondary node (SN) change) and/or a PSCell addition (or a SN addition).

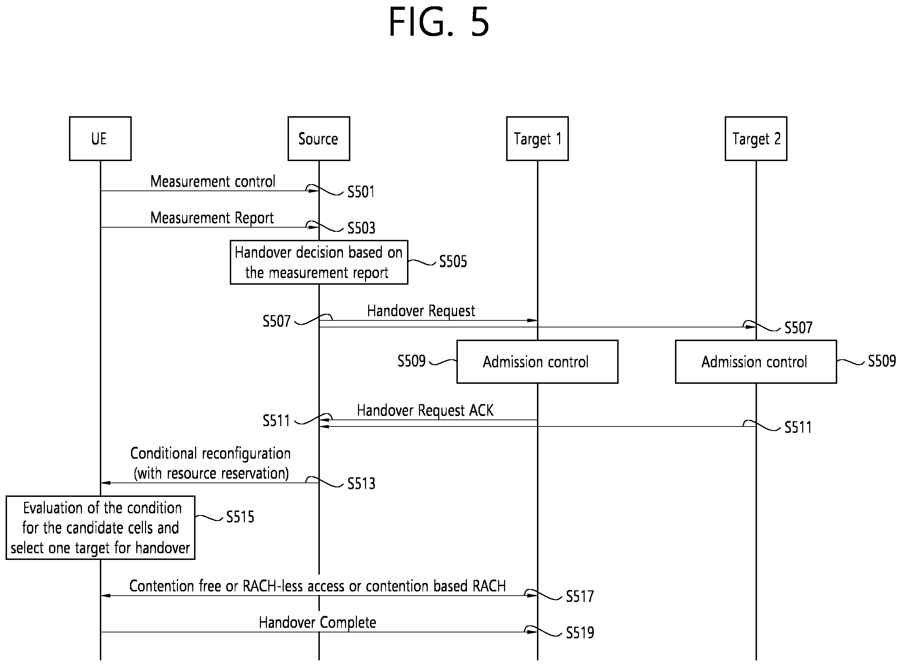

FIG. 5 shows an example of a conditional handover procedure to which the technical idea of the present disclosure can be applied.

Referring to FIG. 5, in step S501, a source cell may transmit a measurement control message to the UE. The measurement control message may include a measurement configuration including a list of measurement configurations, and each measurement configuration in the list includes a measurement identifier (ID), a corresponding measurement object, and a corresponding report configuration.

In step S503, the UE may transmit a measurement report message to the source cell. The measurement report message may include measurement results for neighboring cells around the UE that may be detected by the UE. The UE may generate the measurement report message according to the measurement configuration and/or measurement control information in the measurement control message received in step S501.

In step S505, the source cell may make a handover decision based on the measurement report. For example, the source cell may make a handover decision based on the measurement results (e.g., signal quality, reference signal received power (RSRP), reference signal received quality (RSRQ), etc.) and determine candidate target cells for handover (e.g., target cell 1 and target cell 2) among neighboring cells around the UE.

In step S507, the source cell may transmit a handover request message to the target cell 1 and target cell 2 determined in step S505. That is, the source cell may perform handover preparation together with the target cell 1 and target cell 2. The handover request message may include information necessary for preparing the handover on the target side (e.g., target cell 1 and target cell 2).

In step S509, each of the target cell 1 and target cell 2 may perform access control based on the information included in the handover request message. The target cell may configure and reserve necessary resources (e.g., C-RNTI and/or RACH preamble). The AS configuration used in the target cell may be independently specified (i.e., "establishment") or may be specified as a delta compared to the AS configuration used in the source cell (i.e., "reconfiguration").

In step S511, the target cell 1 and target cell 2 may transmit a handover request acknowledgement (ACK) message to the source cell. The handover request ACK message may include a cell configuration (i.e., an *RRCReconfiguration* message including *ReconfigurationWithSync*) containing information about resources reserved and prepared for the handover. For example, the handover request ACK message may include a transferring container to be transmitted to the UE as an RRC message (i.e., an *RRCReconfiguration* message/cell configuration) to perform the handover. The container/cell configuration/*RRCReconfiguration* message may include information required to access the target cell (i.e., access configuration), including at least one of a physical cell ID of the target cell, an identifier of the UE (i.e., a C-RNTI), an HO validity timer (i.e., a T304 timer), a target gNB security algorithm identifier for a selected security algorithm, a set of dedicated RACH resources for contention-free random access (e.g., a dedicated random access preamble), an association between RACH resources and SSB(s), an association between RACH resources and UE-specific CSI-RS configuration(s), common RACH resources, or system information of the target cell. When a RACH-less handover is configured, the container may include a timing adjustment indication and optionally a pre-allocated uplink grant. The handover request ACK message may also include RNL/TNL information for tunnel forwarding, if necessary. Data forwarding can start when the source cell receives the handover request ACK message or when the transmission of a conditional handover command in the downlink is initiated.

In step S513, the source cell may transmit an *RRCReconfiguration* message to the UE including a conditional reconfiguration. The conditional reconfiguration may also be referred to as (or may include) a conditional handover (CHO) configuration and/or a conditional handover command (e.g., a CHO command). The conditional reconfiguration may include a list of conditional reconfiguration/conditional handover commands, each of which includes a conditional reconfiguration/conditional handover command for each candidate target cell (e.g., target cell 1, target cell 2). For example, the conditional reconfiguration may include a conditional reconfiguration/conditional handover command for target cell 1 and a conditional reconfiguration/conditional handover command for target cell 2. The conditional reconfiguration for a target cell may include an index/identifier identifying the conditional reconfiguration, a handover condition for the target cell, and/or a cell configuration for the target cell (i.e., an *RRCReconfiguration* message including *reconfigurationWithSync*). The *RRCReconfiguration* message and/or *reconfigurationWithSync* for the target cell may include at least one of the physical cell ID of the target cell, the identifier of the UE (i.e., C-RNTI), the HO validity timer (i.e., T304 timer), the target gNB security algorithm identifier for the selected security algorithm, a set of dedicated RACH resources for contention-free random access (e.g., dedicated random access preamble), an association between RACH resources and SSB(s), an association between RACH resources and UE-specific CSI-RS configuration(s), common RACH resources, or system information of the target cell.

In step S515, the UE may perform handover condition evaluation for candidate target cells (e.g., target cell 1, target cell 2), and select a target cell to handover from among the candidate target cells. For example, the UE may perform measurement on the candidate target cells, and determine whether a candidate target cell among the candidate target cells satisfies the handover condition for the candidate target cell based on the measurement result for the candidate target cells. Alternatively, the UE may determine whether the measurement result for the target cell/target cell satisfies the handover condition of the target cell. If the UE determines that the target cell 1 satisfies the handover condition for the target cell 1, the UE may select the target cell 1 as the target cell for the handover.

In step S517, the UE may detach from the previous cell, i.e., the source cell, and synchronize to the new cell, i.e., the selected target cell. The UE may perform a handover from the source cell to the target cell based on applying the cell configuration. For example, upon receiving a handover command, the UE may start a T304 timer and perform a contention-free random access to the target cell according to the dedicated RACH resource set.

In step S519, the UE may stop the T304 timer and transmit a handover complete message (i.e., an *RRCReconfigurationComplete* message) to the target cell if the random access procedure is successfully completed. The UE may indicate that the handover procedure for the UE is completed by sending an *RRCReconfigurationComplete* message to the target cell, which includes a C-RNTI for confirming the handover. The target RAN node may verify the C-RNTI sent in the *RRCReconfigurationComplete* message. The target RAN node may now start transmitting data to the UE. If the random access fails and the T304 timer is still running, the UE may retry the random access to the target cell. If the T304 timer expires, the UE may declare a handover failure (HOF) and perform an RRC re-establishment procedure.

Hereinafter, the S-NG-RAN node addition preparation procedure is described.

The purpose of the S-NG-RAN node addition preparation procedure is to request the S-NG-RAN node to allocate resources for dual connectivity operation for a specific UE.

The S-NG-RAN node addition preparation procedure may use UE-associated signaling.

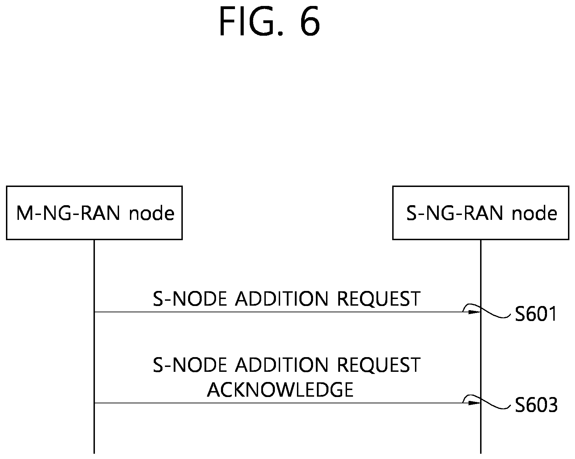

FIG. 6 shows an example of an S-NG-RAN node addition preparation procedure according to an embodiment of the present disclosure.

Referring to FIG. 6, in step S601, the M-NG-RAN node (or MN) may initiate an S-NG-RAN node addition preparation procedure by transmitting an S-NODE ADDITION REQUEST message to the S-NG-RAN node (or SN).

In step S603, the S-NG-RAN node may transmit an S-NODE ADDITION REQUEST ACKNOWLEDGE message to the M-NG-RAN node in response to the S-NODE ADDITION REQUEST message.

In some implementations, if the *CHO Information SN Addition* IE is included in the S-NODE ADDITION REQUEST message, the S-NG-RAN node shall consider that the S-NG-RAN node Addition Preparation procedure has been triggered as part of a conditional handover. It may use the *Source M-NG-RAN node ID* IE and the *Source M-NG-RAN node UE XnAP ID* IE to identify other active S-NG-RAN node Addition Preparations related to this UE. If the *Estimated Arrival Probability* IE is contained in the *CHO Information SN Addition* IE included in the S-NODE ADDITION REQUEST message, then the S-NG-RAN node may use the information to allocate necessary resources for the UE.

In some implementations, if the *Conditional PSCell Addition Information Request* IE is included in the S-NODE ADDITION REQUEST message, the S-NG-RAN node shall, if supported, consider that the request concerns CPAC, as described in TS 37.340 [8]. Accordingly, the S-NG-RAN node shall, if supported, include the *Conditional PSCell Addition Acknowledge* IE in the S-NODE ADDITION REQUEST ACKNOWLEDGE message.

If the *Conditional PSCell Addition Information Acknowledge* is included in the S-NODE ADDITION REQUEST ACKNOWLEDGE message, the M-NG-RAN node shall, if supported, shall, if supported, consider the indicated PSCells are selected by the target SN as candidate PSCells for CPAC.

If the *Estimated Arrival Probability* IE is contained in the *Conditional PSCell Addition Information Request* IE included in the S-NODE ADDITION REQUEST message, then the candidate target S-NG-RAN node may use the information to allocate necessary resources for the incoming CPAC procedure.

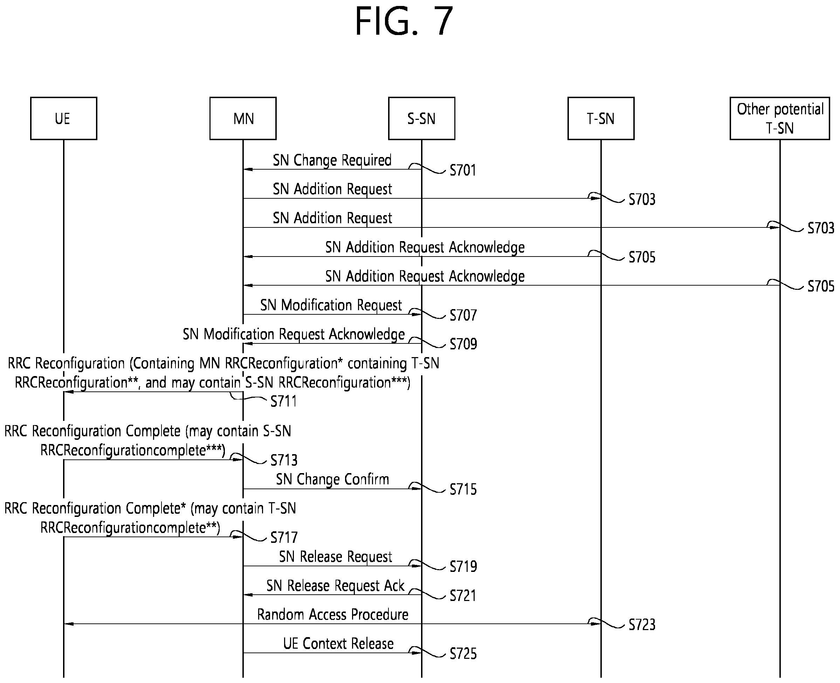

FIG. 7 shows an example of a conditional SN change procedure initiated by an SN according to an embodiment of the present disclosure.

The SN initiated conditional SN change procedure is used for CPC configuration and CPC execution.

The SN initiated conditional SN change procedure may also be initiated by the candidate SN, to modify the existing CPC configuration, or to trigger the release of the candidate SN by cancellation of all the prepared PSCells at the candidate SN and releasing the CPC related UE context at the candidate SN.

Referring to FIG. 7, in step S701, the source SN initiates the conditional SN change procedure by sending the *SN Change Required* message, which contains a CPC initiation indication. The message also contains candidate node ID(s) and may include the SCG configuration (to support delta configuration), and contains the measurements results which may include cells that are not CPC candidates. The message also includes a list of proposed PSCell candidates recommended by the source SN, including execution conditions, the upper limit for the number of PSCells that can be prepared by the candidate SN(s), and may also include the SCG measurement configurations for CPC (e.g. measurement ID(s) to be used for CPC).

In step S703, the MN transmits an SN addition request message to request each candidate SN(s) to allocate resources for the UE by means of the SN Addition procedure(s), including a CPC initiation indication, and the measurements results which may include cells that are not CPC candidates received from the source SN to the candidate SN, and indicating a list of proposed PSCell candidates received from the source SN, but not including execution conditions. Within the list of PSCells suggested by the source SN, the candidate SN decides the list of PSCell(s) to prepare (considering the maximum number indicated by the MN) and, for each prepared PSCell, the candidate SN decides SCG SCells.

In step S705, the candidate SN(s) may generate a SCG configuration including the configuration for the determined PSCell(s) and/or the configuration for the SCell(s), and transmit an SN addition request ACK (acknowledge) message including an RRCReconfiguration** message including the generated SCG configuration to the MN. If data forwarding is needed, the candidate SN provides data forwarding addresses to the MN. The candidate SN includes the indication of full or delta RRC configuration, and the list of prepared PSCell IDs to the MN. The candidate SN can either accept or reject each of the candidate cells suggested by the source SN, i.e., it cannot configure any alternative candidates.

In step S707, when not all candidate PSCells were accepted by the candidate SN, the MN may transmit an SN modification request message indicating the candidate PSCells accepted by the candidate SN to the source SN before transmitting the conditional mobility command including the SCG configuration for the candidate SN/PSCell to the UE. If the above indication is unnecessary, steps S707 and S709 may be omitted.

In step S709, the source SN that receives the SN modification request message may discard conditional mobility commands for unapproved candidate SNs/PSCells from the list of conditional mobility commands stored in the source SN, thereby updating the list of conditional mobility commands. Then, the source SN may transmit an SN modification request ACK message to the MN. If necessary, the SN modification request ACK message may include updated measurement configurations and/or execution conditions.

In step S711, the MN may transmit an *RRCReconfiguration* message to the UE, including a list of CPC configurations/conditional mobility commands - i.e., *RRCReconfiguration** messages and execution conditions associated therewith, where each *RRCReconfiguration ** message may include SCG configurations and MCG configurations included in the *RRCReconfiguration*** message received from the candidate SN in step S705. The *RRCReconfiguration** message may also include updated MCG configurations as well as the NR *RRCReconfiguration**** message generated by the source SN to configure the required conditional measurements. The list of CPC configurations/conditional mobility commands transmitted to the UE may be identical to the list of conditional mobility commands stored in the source SN, or may be included in the list of conditional mobility commands stored in the source SN, or may include a list of conditional mobility commands stored in the source SN.

In step S713, the UE may apply the *RRCReconfiguration* message received in step S711, store the list of CPC configurations/conditional mobility commands, and transmit an *RRCReconfigurationComplete* message containing an NR *RRCReconfigurationComplete**** message to the MN. If the UE cannot comply with at least some of the configurations included in the *RRCReconfiguration* message, it may perform a reconfiguration failure procedure.

In step S715, if the SN RRC response message is included in the *RRCReconfigurationComplete,* the MN may transmit an SN change acknowledge message including an SN *RRCReconfigurationComplete**** message to the source SN. If steps S707 and S709 are omitted, the MN may indicate the candidate PSCell(s) accepted by the candidate SN through the SN change acknowledge message. The source SN that receives the SN change acknowledge message may discard the conditional mobility commands for the unapproved candidate SNs/PSCells from the list of conditional mobility commands stored in the source SN, thereby updating the list of conditional mobility commands.

The MN may transmit an SN change acknowledge message to the source SN to indicate that the CPC is ready, in which case the source SN may continue to provide user data to the UE. When early data forwarding is applied, the MN informs the source SN of the data forwarding address received from the candidate SN, and if applicable, the source SN initiates early data forwarding with the Early Status Transfer procedure. PDCP SDU delivery may occur during the early data forwarding. If there are multiple candidate SNs, the MN may inform the source SN of the target SN ID list and the data forwarding address list via the SN Change Confirmation message.

In step S717, the UE may start evaluating the execution conditions (i.e., determining whether the execution conditions are satisfied). If the execution conditions of a candidate PSCell are satisfied, the UE applies the *RRCReconfiguration ** message corresponding to the selected candidate PSCell, and transmits the *RRCReconfigurationComplete*** message for the selected candidate PSCell and the *RRCReconfigurationComplete ** message containing information that enables the MN to identify the SN of the selected candidate PSCell.

In step S719, the MN may transmit an SN Release Request message to the source SN to notify it to stop providing user data to the UE.

In step S721, the source SN may transmit an SN Release Request ACK message to the MN in response to the SN Release Request message.

In step S723, the UE may synchronize to the UL/DL of the PSCell indicated in the *RRCReconfiguration** message applied in step S717. For example, to synchronize to the UL of the PSCell, the UE may perform a random access procedure for the PSCell.

In step S725, the MN may transmit a UE Context Release message to the source SN. Upon receiving the UE Context Release message, the source SN may release radio and C-plane related resources associated with the UE context. Any ongoing data transfer may continue.

Meanwhile, UE can perform handover from a source MN to a target MN without changing the SN currently in use in the NR-DC situation (i.e., inter-MN handover without SN change). The inter-MN handover without SN change can be used to transfer UE context data from the source MN to the target MN while the UE context in the SN is maintained. The inter-MN handover without SN change is to support a method in which the UE can use the information about candidate PSCells that it already has (i.e., the list of conditional mobility commands for candidate PSCells/SNs) without reconfiguration and reinitialization of conditional PSCell change (CPC)/conditional PSCell addition (CPA). If the UE uses the information about candidate PSCells as is in the inter-MN handover situation without SN change, SCG failure may occur because the information about the candidate PSCells is information without coordination with the target MN. A method is required to prevent this situation from occurring.

Accordingly, according to various embodiments of the present disclosure, when a UE performs handover from a source MN to a target MN without SN change in an NR-DC situation, the target MN provides the SN with target MN configuration information, and based on the target MN configuration information, the SN can check whether a list of conditional mobility commands it has for the UE to be handed over is compatible with the target MN. When the SN determines conditional mobility command(s) available to the target MN from the list of conditional mobility commands based on the information received from the target MN, the SN can update the list of conditional mobility commands and transmit it to the target MN so as to provide the UE with it. The target MN, which receives the updated list of conditional mobility commands from the SN, transmits the updated list of conditional mobility commands to the source MN via a HandoverCommand message and/or a Handover Request ACK message, and the source MN, which receives it, can provide the UE with the updated list of conditional mobility commands so as to command the UE to perform the handover.

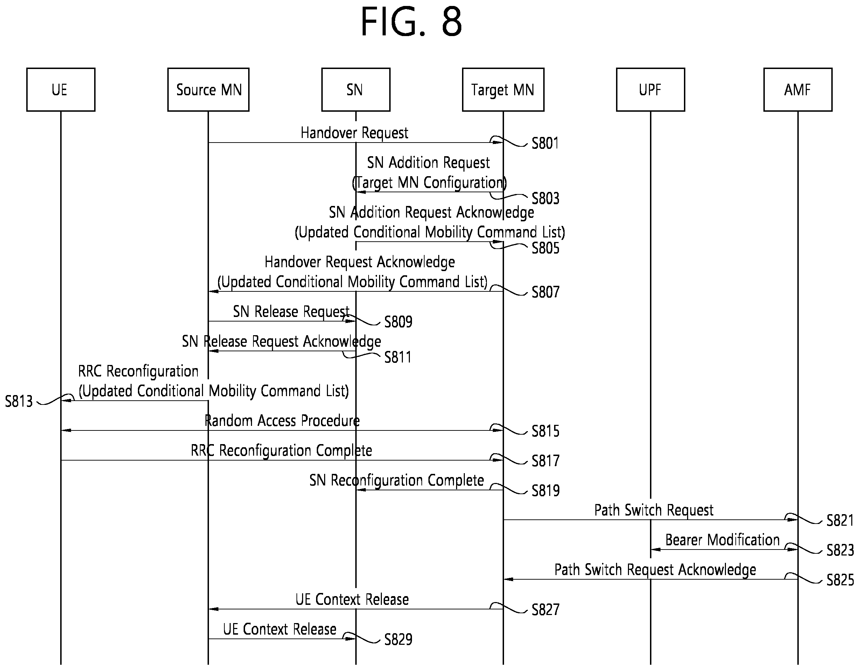

FIG. 8 shows an example of an inter-MN handover procedure without SN change initiated by an MN according to an embodiment of the present disclosure. FIG. 8 shows a procedure for providing a list of updated conditional mobility commands to a UE when a UE hands over from a source MN to a target MN without SN change in an NR-DC situation.

Referring to FIG. 8, in step S801, a source MN may initiate a handover procedure by transmitting a handover request message to a target MN.

In various embodiments, the handover may include at least one of a PCell change, a legacy handover, or a conditional handover (CHO).

In step S803, if the target MN decides not to change the SN for the UE to be handed over, the target MN may transmit an SN addition request (S-node addition request) message to the SN including an indicator (e.g., SN UE XnAP ID IE) notifying that the UE context is maintained in the SN. In addition, in order to enable the SN to check whether the list of conditional mobility commands that it has (or stores) for the UE to be handed over is suitable for the target MN, the SN addition request message may include target MN configuration information that may be applicable to the UE to be handed over. The target MN configuration information may be transmitted in a container (e.g., M-NG-RAN node to S-NG-RAN node Container IE) or may be transmitted in the form of a new IE.

In various embodiments, each entry in the list of conditional mobility commands may include a conditional mobility command for SN mobility of the UE from the SN to a candidate SN. The SN mobility may include at least one of a conditional PSCell change (CPC) or a conditional PSCell addition (CPA) to a candidate PSCell. The conditional mobility command may include at least one of an ID of the conditional mobility command, an execution condition for SN mobility to the candidate SN, or a configuration for the candidate SN.

In step S805, the SN that has received the SN node addition request message determines conditional mobility commands available to the target MN from the list of conditional mobility commands based on the received target MN configuration information. The SN may update the list of conditional mobility commands with the determined conditional mobility commands. In order to provide the UE with the updated list of conditional mobility commands, the SN may transmit an SN addition request ACK message including the updated list of conditional mobility commands to the target MN. The list may be transmitted in a container (e.g., S-NG-RAN node to M-NG-RAN node Container IE) or in the form of a new IE.

In various embodiments, the target MN configuration information (or the configuration for the target MN) may include at least one of IDs of conditional mobility commands available to the target MN from the list of conditional mobility commands, or IDs of SNs or PSCells associated with the available conditional mobility commands.

In various embodiments, the target MN configuration information (or the configuration for the target MN) may include at least one of IDs of conditional mobility commands not available to the target MN from the list of conditional mobility commands, or IDs of SNs or PSCells associated with the unavailable conditional mobility commands.

In various embodiments, the SN may identify at least one mobility command not available to the target MN from the list of conditional mobility commands based on the target MN configuration information, and may update the list of conditional mobility commands by discarding the at least one mobility command not available.

In step S807, the target MN that has received the list of updated conditional mobility commands may include the received list information in the HandoverCommand message included in the Target NG-RAN node To Source NG-RAN node Transparent container IE to provide the list to the UE, and may transmit a handover request ACK message capable of forwarding the container IE to the source MN, or transmit the received list information in the form of a new IE. At this time, the target MN may transmit an indicator to the source MN indicating that the UE context is maintained in the SN.

In various embodiments, the list information included in the handover request ACK message may include at least one of the updated list of conditional mobility commands, IDs of conditional mobility commands available to the target MN, IDs of SNs or PSCells related to conditional mobility commands available to the target MN, IDs of conditional mobility commands not available to the target MN, or IDs of SNs or PSCells related to conditional mobility commands not available to the target MN.

In step S809, the source MN that receives the handover request ACK message can transmit an SN release request message to the SN. Since the handover request ACK message received from the target MN includes an indication that the UE context is maintained in the SN, the source MN can transmit an SN release request message that includes the indication that the UE context is maintained in the SN to the SN.

In step S811, the SN that has received the SN Release Request message may transmit an SN Release Request ACK message to the source MN as a response. Since the SN Release Request message received from the source MN includes an indicator that the UE context is maintained in the SN, the SN may maintain the UE context.

In step S813, the source MN that has received the Handover Request ACK message may transmit an RRC reconfiguration message to the UE in order for the UE to perform a handover and apply new configurations. At this time, a Handover Command (i.e., HandoverCommand) message including information about a list of updated conditional mobility commands may be included in the RRC reconfiguration message and transmitted, or information about a list of updated conditional mobility commands included in a new IE may be included in the RRC Reconfiguration message and transmitted.

In various embodiments, the list information transmitted to the UE may include at least one of a list of updated conditional mobility commands, an ID of conditional mobility commands available for the target MN, an ID of an SN or PSCell associated with conditional mobility commands available for the target MN, an ID of conditional mobility commands not available for the target MN, or an ID of an SN or PSCell associated with conditional mobility commands not available for the target MN.

In step S815, the UE may perform a random access procedure with the target MN.

In step S817, the UE transmits an RRC reconfiguration complete message to the target MN in response to the RRC reconfiguration message.

In step S819, the target MN, which has successfully received the RRC reconfiguration complete message, may transmit an SN reconfiguration complete message to notify the SN of this.

In steps S821 to S825, the target MN may perform a path switch procedure with the AMF. Specifically, in step S821, the target MN may transmit a path switching request message to the AMF. In step S823, the UPF and the AMF may perform bearer modification. In step S825, the AMF may transmit a path switching request ACK message to the target MN.

In step S827, the target MN that has received the path switching request ACK message may transmit a UE context release message to the source MN.

In step S829, the source MN that has received the UE context release message may remove the UE context. In addition, the source MN may transmit a UE context release message to the SN. Since the SN has received an indication that the UE context is maintained in step S809, the SN does not remove the UE context associated with the target MN.

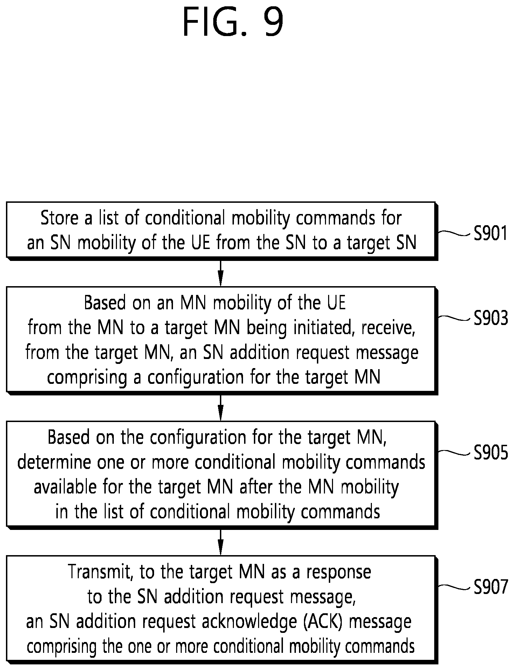

FIG. 9 shows an example of a method performed by a SN establishing a DC with a MN for a UE.

Referring to FIG. 9, in step S901, the SN may store a list of conditional mobility commands for an SN mobility of the UE from the SN to a target SN.

In step S903, based on an MN mobility of the UE from the MN to a target MN being initiated, the SN may receive, from the target MN, an SN addition request message comprising a configuration for the target MN.

In step S905, based on the configuration for the target MN, the SN may determine one or more conditional mobility commands available for the target MN after the MN mobility in the list of conditional mobility commands.

In step S907, the SN may transmit, to the target MN as a response to the SN addition request message, an SN addition request acknowledge (ACK) message comprising the one or more conditional mobility commands.

According to various embodiments, the SN mobility may comprise at least one of a conditional primary secondary cell (PSCell) change (CPC) or a conditional PSCell addition (CPA). The MN mobility may comprise at least one of primary cell (PCell) change, handover or conditional handover (CHO).

According to various embodiments, each conditional mobility command in the list of conditional mobility commands is related to a corresponding candidate SN among a plurality of candidate SNs. Each conditional mobility command may comprise at least one of: an identifier (ID) of a corresponding conditional mobility command; an execution condition for an SN mobility to the corresponding candidate SN; or a configuration for the corresponding candidate SN.

According to various embodiments, the configuration for the target MN may comprise at least one of: identifiers (IDs) of the one or more conditional mobility commands; or IDs of SNs or primary secondary cells (PSCells) related to the one or more conditional mobility commands.

According to various embodiments, the configuration for the target MN may comprise at least one of: an identifier (ID) of at least one conditional mobility command which is not available for the target MN; or an ID of an SN or a primary secondary cell (PSCell) related to the at least one conditional mobility command.

According to various embodiments, based on the configuration for the target MN, the SN may identify at least one conditional mobility command unavailable for the target MN after the MN mobility in the list of conditional mobility commands. The SN may update the list of conditional mobility commands by discarding the at least one conditional mobility command.

According to various embodiments, the SN addition request message may comprise an indicator indicating to maintain UE contexts in the SN after the MN mobility.

According to various embodiments, the MN may transmit a handover request message for initiating the MN mobility to the target MN. The target MN may transmit a handover request ACK message comprising information for the one or more conditional mobility commands to the MN as a response to the handover request message.

According to various embodiments, the handover request ACK message may comprise an indicator indicating to maintain a UE context in the SN after the MN mobility.

According to various embodiments, the information for the one or more conditional mobility commands may comprise at least one of: an updated version of the list of conditional mobility commands comprising the one or more conditional mobility commands; identifiers (IDs) of the one or more conditional mobility commands; IDs of SNs or primary secondary cells (PSCells) related to the one or more conditional mobility commands; an ID of at least one conditional mobility command unavailable for the target MN; or an ID of an SN or a PSCell related to the at least one conditional mobility command.

According to various embodiments, the SN may receive, from the MN, an SN release request message. The SN may transmit an SN release request ACK message as a response to the SN release request message. The SN release request message may comprise an indicator indicating a UE context in the SN after the MN mobility.

According to various embodiments, the MN may transmit information for the one or more conditional mobility commands to the UE.

According to various embodiments, the MN may transmit a handover command for the MN mobility to the UE. The handover command may comprise information for the one or more conditional mobility commands.

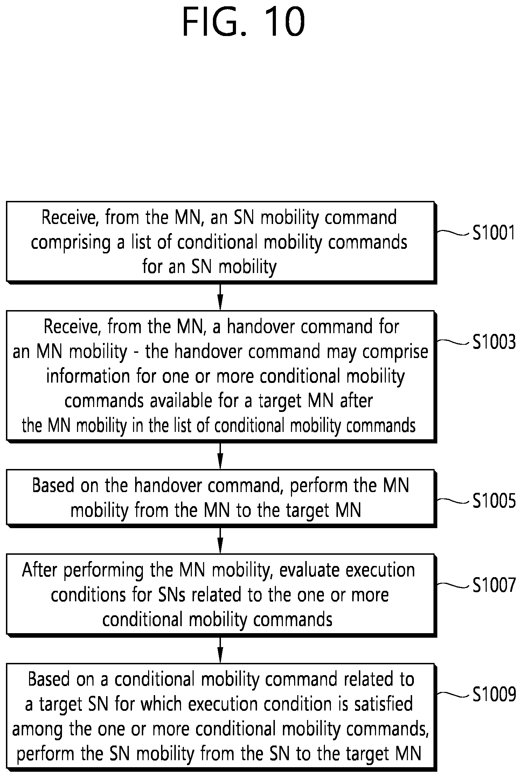

FIG. 10 shows an example of a method performed by a UE having established a DC with a MN and a SN according to an embodiment of the present disclosure.

Referring to FIG. 10, in step S1001, the UE may receive, from the MN, an SN mobility command comprising a list of conditional mobility commands for an SN mobility.

In step S1003, the UE may receive, from the MN, a handover command for an MN mobility. The handover command may comprise information for one or more conditional mobility commands available for a target MN after the MN mobility in the list of conditional mobility commands.

In step S1005, based on the handover command, the UE may perform the MN mobility from the MN to the target MN.

In step S1007, after performing the MN mobility, the UE may evaluate execution conditions for SNs related to the one or more conditional mobility commands.

In step S1009, based on a conditional mobility command related to a target SN for which execution condition is satisfied among the one or more conditional mobility commands, the UE may perform the SN mobility from the SN to the target MN.

Furthermore, the method from the perspective of a SN establishing a DC with a MN for a UE described in the present disclosure (e.g., FIG. 9) may be performed by the first wireless device (100) illustrated in FIG. 2.

More specifically, the UE may comprise at least one transceiver, at least one memory, and at least one processor operatively coupled to the at least one transceiver and the at least one memory. The at least one memory may store instructions that, based on being executed by the at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

Furthermore, the method from the perspective of a SN establishing a DC with a MN for a UE described in the present disclosure (e.g., FIG. 9) may be performed by the control of the processor (102) included in the first wireless device (100) illustrated in FIG. 2.

More specifically, an apparatus configured to operate in a wireless communication system comprises at least one processor, and a memory operatively coupled to the at least one processor and storing instructions that, based on being executed by the at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

Furthermore, the method from the perspective of a SN establishing a DC with a MN for a UE described in the present disclosure (e.g., FIG. 9) may be performed by software code stored in the memory (104) included in the first wireless device (100) illustrated in FIG. 2.

More specifically, a non-transitory computer readable medium (CRM) stores software code that implements instructions that, based on being executed by at least one processor, perform operations comprising: storing a list of conditional mobility commands for an SN mobility of the UE from the SN to a target SN; based on an MN mobility of the UE from the MN to a target MN being initiated, receiving, from the target MN, an SN addition request message comprising a configuration for the target MN; based on the configuration for the target MN, determining one or more conditional mobility commands available for the target MN after the MN mobility in the list of conditional mobility commands; and transmitting, to the target MN as a response to the SN addition request message, an SN addition request acknowledge (ACK) message comprising the one or more conditional mobility commands.

Furthermore, the method from the perspective of a UE having established a DC with a MN and a SN described in the present disclosure (e.g., FIG. 10) may be performed by the second wireless device (200) illustrated in FIG. 2 and/or the UE (100) illustrated in FIG. 3.

More specifically, a user equipment (UE) in a wireless communication system comprises: a transceiver; a memory; and at least one processor operatively coupled to the transceiver and the memory, where the memory stores instructions that, based on being executed by the at least one processor, perform operations comprising: receiving, from the MN, an SN mobility command comprising a list of conditional mobility commands for an SN mobility; receiving, from the MN, a handover command for an MN mobility, wherein the handover command comprises information for one or more conditional mobility commands available for a target MN after the MN mobility in the list of conditional mobility commands; based on the handover command, performing the MN mobility from the MN to the target MN; after performing the MN mobility, evaluating execution conditions for SNs related to the one or more conditional mobility commands; and based on a conditional mobility command related to a target SN for which execution condition is satisfied among the one or more conditional mobility commands, performing the SN mobility from the SN to the target MN.

The present disclosure can have various advantageous effects.

For example, in an NR-DC situation, when a UE performs handover from a source MN to a target MN without SN change, in order to update a list of conditional mobility commands of the UE, the target MN can provide target MN configuration information to the SN, and based on the target MN configuration information, the SN can update the list of conditional mobility commands and send it to the target MN, and the target MN, which receives the updated list of conditional mobility commands, can forward it to the UE through the source MN. In this way, when a UE with the updated list of conditional mobility commands performs conditional PSCell addition/change (CPAC), an SCG failure that may occur can be avoided. In addition, this can avoid performance degradation that may occur when a UE moves between base stations.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a secondary node (SN) establishing a dual connectivity (DC) with a master node (MN) for a user equipment (UE) in a wireless communication system, the method comprising:
storing a list of conditional mobility commands for an SN mobility of the UE from the SN to a target SN;
based on an MN mobility of the UE from the MN to a target MN being initiated, receiving, from the target MN, an SN addition request message comprising a configuration for the target MN;
based on the configuration for the target MN, determining one or more conditional mobility commands available for the target MN after the MN mobility in the list of conditional mobility commands; and
transmitting, to the target MN as a response to the SN addition request message, an SN addition request acknowledge (ACK) message comprising the one or more conditional mobility commands.

2. The method of claim 1, wherein the SN mobility comprises at least one of a conditional primary secondary cell (PSCell) change (CPC) or a conditional PSCell addition (CPA), and
wherein the MN mobility comprises at least one of primary cell (PCell) change, handover or conditional handover (CHO).

3. The method of claim 1, wherein each conditional mobility command in the list of conditional mobility commands is related to a corresponding candidate SN among a plurality of candidate SNs, and comprises at least one of:
an identifier (ID) of a corresponding conditional mobility command;
an execution condition for an SN mobility to the corresponding candidate SN; or
a configuration for the corresponding candidate SN.

4. The method of claim 1, wherein the configuration for the target MN comprises at least one of:
identifiers (IDs) of the one or more conditional mobility commands; or
IDs of SNs or primary secondary cells (PSCells) related to the one or more conditional mobility commands.

5. The method of claim 1, wherein the configuration for the target MN comprises at least one of:
an identifier (ID) of at least one conditional mobility command which is not available for the target MN; or
an ID of an SN or a primary secondary cell (PSCell) related to the at least one conditional mobility command.

6. The method of claim 1, wherein the determining of the one or more conditional mobility commands available for the target MN comprises:
based on the configuration for the target MN, identifying at least one conditional mobility command unavailable for the target MN after the MN mobility in the list of conditional mobility commands; and
updating the list of conditional mobility commands by discarding the at least one conditional mobility command.

7. The method of claim 1, wherein the MN transmits a handover request message for initiating the MN mobility to the target MN, and
wherein the target MN transmits a handover request ACK message comprising information for the one or more conditional mobility commands to the MN as a response to the handover request message.

8. The method of claim 7, wherein the handover request ACK message comprises an indicator indicating to maintain a UE context in the SN after the MN mobility.

9. The method of claim 7, wherein the information for the one or more conditional mobility commands comprises at least one of:
an updated version of the list of conditional mobility commands comprising the one or more conditional mobility commands;
identifiers (IDs) of the one or more conditional mobility commands;
IDs of SNs or primary secondary cells (PSCells) related to the one or more conditional mobility commands;
an ID of at least one conditional mobility command unavailable for the target MN; or
an ID of an SN or a PSCell related to the at least one conditional mobility command.

10. The method of claim 1, further comprising:
receiving, from the MN, an SN release request message; and
transmitting an SN release request ACK message as a response to the SN release request message,
wherein the SN release request message comprises an indicator indicating a UE context in the SN after the MN mobility.

11. The method of claim 1, wherein the MN transmits information for the one or more conditional mobility commands to the UE.

12. The method of claim 11, wherein the MN transmits a handover command for the MN mobility to the UE, and
wherein the handover command comprises information for the one or more conditional mobility commands.

13. The method of claim 1, wherein the UE is in communication with at least one of another UE, network or autonomous vehicles.

14. A secondary node (SN) establishing a dual connectivity (DC) with a master node (MN) for a user equipment (UE) in a wireless communication system, the SN comprising:
a transceiver;
a memory; and
at least one processor operatively coupled to the transceiver and the memory,
wherein the memory stores instructions that, based on being executed by the at least one processor, perform operations comprising:
storing a list of conditional mobility commands for an SN mobility of the UE from the SN to a target SN;
based on an MN mobility of the UE from the MN to a target MN being initiated, receiving, from the target MN, an SN addition request message comprising a configuration for the target MN;
based on the configuration for the target MN, determining one or more conditional mobility commands available for the target MN after the MN mobility in the list of conditional mobility commands; and
transmitting, to the target MN as a response to the SN addition request message, an SN addition request acknowledge (ACK) message comprising the one or more conditional mobility commands.

15. The method of claim 14, wherein the SN is adapted to implement a method of one of claims 2 to 13.

16. A user equipment (UE) having established a dual connectivity (DC) with a master node (MN) and a secondary node (SN) in a wireless communication system, the UE comprising:
a transceiver;
a memory; and
at least one processor operatively coupled to the transceiver and the memory,
wherein the memory stores instructions that, based on being executed by the at least one processor, perform operations comprising:
receiving, from the MN, an SN mobility command comprising a list of conditional mobility commands for an SN mobility;
receiving, from the MN, a handover command for an MN mobility, wherein the handover command comprises information for one or more conditional mobility commands available for a target MN after the MN mobility in the list of conditional mobility commands;
based on the handover command, performing the MN mobility from the MN to the target MN;
after performing the MN mobility, evaluating execution conditions for SNs related to the one or more conditional mobility commands; and
based on a conditional mobility command related to a target SN for which execution condition is satisfied among the one or more conditional mobility commands, performing the SN mobility from the SN to the target MN.

17. A method performed by a user equipment (UE) having established a dual connectivity (DC) with a master node (MN) and a secondary node (SN) in a wireless communication system, the method comprising:
receiving, from the MN, an SN mobility command comprising a list of conditional mobility commands for an SN mobility;
receiving, from the MN, a handover command for an MN mobility, wherein the handover command comprises information for one or more conditional mobility commands available for a target MN after the MN mobility in the list of conditional mobility commands;
based on the handover command, performing the MN mobility from the MN to the target MN;
after performing the MN mobility, evaluating execution conditions for SNs related to the one or more conditional mobility commands; and
based on a conditional mobility command related to a target SN for which execution condition is satisfied among the one or more conditional mobility commands, performing the SN mobility from the SN to the target MN.

18. The method of claim 17, wherein the SN is adapted to implement a method of one of claims 1 to 13.

19. An apparatus configured to operate in a wireless communication system, the apparatus comprising:
at least one processor; and
a memory operatively coupled to the at least one processor and storing instructions that, based on being executed by the at least one processor, perform operations comprising:
storing a list of conditional mobility commands for an SN mobility of the UE from the SN to a target SN;
based on an MN mobility of the UE from the MN to a target MN being initiated, receiving, from the target MN, an SN addition request message comprising a configuration for the target MN;
based on the configuration for the target MN, determining one or more conditional mobility commands available for the target MN after the MN mobility in the list of conditional mobility commands; and
transmitting, to the target MN as a response to the SN addition request message, an SN addition request acknowledge (ACK) message comprising the one or more conditional mobility commands,
wherein the UE has established a dual connectivity (DC) with the SN and the MN.

20. A non-transitory computer readable medium (CRM) having stored thereon a software code implementing instructions that, based on being executed by at least one processor, perform operations comprising:
storing a list of conditional mobility commands for an SN mobility of the UE from the SN to a target SN;
based on an MN mobility of the UE from the MN to a target MN being initiated, receiving, from the target MN, an SN addition request message comprising a configuration for the target MN;
based on the configuration for the target MN, determining one or more conditional mobility commands available for the target MN after the MN mobility in the list of conditional mobility commands; and
transmitting, to the target MN as a response to the SN addition request message, an SN addition request acknowledge (ACK) message comprising the one or more conditional mobility commands,
wherein the UE has established a dual connectivity (DC) with the SN and the MN.
